# EUROPÄISCHE PATENTSCHRIFT

(11) **EP 1 556 281 B1**
(45) Veröffentlichungstag und Bekanntmachung des Hinweises auf die Patenterteilung: **04.07.2007**
(21) Anmeldenummer: 03775243.3
(22) Anmeldetag: 28.10.2003
(51) Int. Cl.: B65D 1/00

(54) **GETRAENKEHALTER**
DRINKS HOLDER
PORTE-BOISSONS

(30) Priorität: 29.10.2002 DE 20216676 U
(43) Veröffentlichungstag der Anmeldung: 27.07.2005
(73) Patentinhaber: TRW Automotive Electronics & Components GmbH & Co. KG, 67677 Enkenbach/Alsenborn (DE)
(72) Erfinder: WAGNER, Jörg, 67661 Kaiserslautern (DE)
(74) Vertreter: Sties, Jochen
(86) Internationale Anmeldenummer: PCT/EP2003/011944
(87) Internationale Veröffentlichungsnummer: WO 2004/039679

(56) Entgegenhaltungen:
- EP-A- 0 842 815
- DE-A- 10 016 463
- DE-A- 10 060 798
- DE-U- 20 206 190

## Beschreibung

Die Erfindung betrifft einen Getränkehalter, wie er insbesondere in Kraftfahrzeugen verwendet wird.

Ein solcher Getränkehalter muß eine Vielzahl von Anforderungen erfüllen. Zum einen soll er eine Vielzahl von unterschiedlichen Behältnissen zuverlässig aufnehmen und festhalten können. Zum anderen soll er aus einer Betriebsstellung, in der er die Behältnisse aufnehmen kann, in eine möglichst platzsparende Bereitschaftsstellung überführt werden können, und umgekehrt. In der Bereitschaftsstellung soll der Getränkehalter vorzugsweise nicht sichtbar sein, beispielsweise hinter einer Abdeckung versteckt, oder in anderer Weise so in eine ihn umgebende Verkleidung integriert, daß ein harmonischer optischer Gesamteindruck entsteht. Schließlich ist es wünschenswert, daß das Behältnis gekühlt oder erwärmt werden kann.

Die bisher bekannten Getränkehalter haben diese Anforderungen nicht immer überzeugend erfüllt.

Die EP-A-0 842 815 zeigt einen Getränkehalter, der eine verschiebbar in einem Gehäuse angeordnete Bodenplatte, eine mit der Bodenplatte verbundene Frontplatte und Aufnahmeplatte aufweist, die schwenkbar oberhalb der Bodenplatte angebracht ist.

Die DE-A-100 16 463 zeigt einen Getränkehalter, der einen schwenkbar angebrachten Rahmen aufweist, der einen ausfahrbahren Behälter umgibt. Am Rahmen sind eine Bodenplatte und ein Haltering angebracht.

Die Aufgabe der Erfindung besteht darin, einen Getränkehalter zu schaffen, der die oben genannten Anforderungen erfüllt.

Zu diesem Zweck ist erfindungsgemäß ein Getränkehalter mit den Merkmalen des Anspruchs 1 vorgesehen. Der Getränkehalter kann vollständig im Armaturenbrett versenkt werden, so daß er im versenkten Zustand nicht auffällt. Der Rahmen kann beispielsweise einen Luftausströmer umgeben, so daß der von diesem abgegebene Luftstrom ein im Getränkehalter abgestelltes Behältnis erwärmen oder kühlen kann.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 einen erfindungsgemäßen Getränkehalter in einem ausgefahrenen Zustand; und
- Figur 2 eine Variante des in Figur 1 gezeigten Getränkehalters.

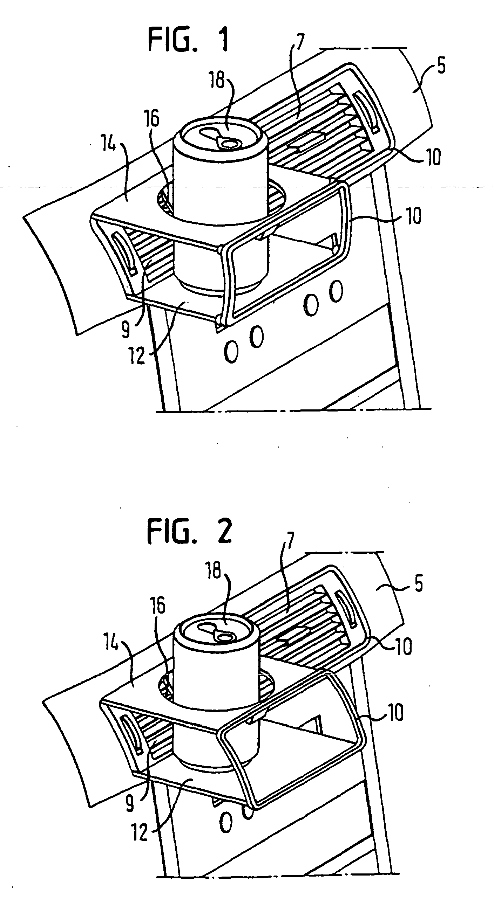

In Figur 1 ist ein Abschnitt eines Armaturenbrettes 5 zu sehen, in welchem zwei Luftausströmer 7, 9 angeordnet sind. Jeder der Luftausströmer ist von einem Rahmen 10 umgeben, der etwa bündig mit der Oberfläche des Armaturenbrettes 5 abschließt. Mit dem Rahmen sind eine Bodenplatte 12 und eine Aufnahmeplatte 14 gelenkig verbunden. In der Aufnahmeplatte 14 ist eine Aufnahmeöffnung 16 ausgebildet, in die ein Behältnis 18 für ein Getränk gestellt werden kann. Die Bodenplatte 12 und die Aufnahmeplatte 16 sind durch einen Federmechanismus mit Silikon-Dämpfung in die in Figur 2 gezeigte, ausgefahrene Stellung beaufschlagt. In der im Armaturenbrett 5 versenkten Stellung werden sie von einem Druck-Druck-Verriegelungsmechanismus gehalten. Durch einen ersten Druck auf den Rahmen 10 wird der Verriegelungsmechanismus gelöst, so daß die Bodenplatte 14 und die Aufnahmeplatte 16 nach vorne hervorgeschoben werden. Die Aufnahmeplatte 14 legt dabei einen geringfügig größeren Weg zurück, so daß der Rahmen 10 in eine vertikale Stellung aufgerichtet wird.

Wenn der Getränkehalter im Armaturenbrett versenkt wird, wird er durch Druck auf den Rahmen 10 zurückgeschoben, wobei der Rahmen dabei geringfügig nach hinten kippt, so daß er sich bündig in das Armaturenbrett 10 einfügt, wobei der Druck-Druck-Verriegelungsmechanismus einrastet.

In Figur 2 ist eine Ausführungsvariante gezeigt, bei welcher die Bodenplatte 12 und die Aufnahmeplatte 14 starr mit dem Rahmen 10 verbunden sind. Dieser bleibt also immer in seiner schräg gekippten Stellung.

## Patentansprüche

1. Getränkehalter, insbesondere für ein Kraftfahrzeug, mit einer Bodenplatte (12) und einer zu dieser etwa parallel verlaufenden Aufnahmeplatte (14), die beide an einem Träger (5) wie einem Armaturenbrett so angeordnet sind, daß sie gegenüber diesem hervorgeschoben bzw. zurückgeschoben werden können, so daß sie in ihn versenkt sind, und an ihrem freien Ende durch einen Rahmen (10) miteinander verbunden sind, der im versenkten Zustand der Bodenplatte (12) und der Aufnahmeplatte (14) bündig mit dem Träger abschließt.

2. Getränkehalter nach Anspruch 1, **dadurch gekennzeichnet, daß** zwischen der Bodenplatte (12) und der Aufnahmeplatte (14) ein Luftausströmer (7, 9) angeordnet ist.

3. Getränkehalter nach Anspruch 1 oder Anspruch 2, **dadurch gekennzeichnet, daß** der Rahmen (10) gelenkig mit der Bodenplatte und der Aufnahmeplatte verbunden ist.

## Claims

1. A cup holder, in particular for a motor vehicle, comprising a base plate (12) and a receiving plate (14) that runs approximately parallel to the former, which are both arranged at a support (5) such as a dashboard such that they can be pushed out of and pushed back in relation to the support (5) so that they are retracted into it and, at their free ends, are connected to each other by a frame (10) which is flush with the support when the base plate (12) and the receiving plate (14) are in the retracted condition.

2. The cup holder according to claim 1, **characterized in that** an air vent (7, 9) is arranged between the base plate (12) and the receiving plate (14).

3. The cup holder according to claim 1 or claim 2, **characterized in that** the frame (10) is hinged to the base plate and the receiving plate.

## Revendications

1. Porte-boissons, en particulier pour un véhicule automobile, comportant une plaque de fond (12) et une plaque de réception (14) s'étendant approximativement parallèlement à celle-ci, qui sont toutes les deux agencées sur un support (5) tel qu'un tableau de bord de manière à pouvoir être respectivement sorties et rentrées de façon télescopique par rapport à celui-ci de telle sorte qu'elles sont escamotées dans celui-ci, et qui, à leur extrémité libre, sont reliées l'une à l'autre par un cadre (10) qui, à l'état escamoté de la plaque de fond (12) et de la plaque de réception (14), ferme en affleurement avec le support.

2. Porte-boissons selon la revendication 1, **caractérisé en ce qu'**un diffuseur d'air (7, 9) est agencé entre la plaque de fond (12) et la plaque de réception (14).

3. Porte-boissons selon la revendication 1 ou 2, **caractérisé en ce que** le cadre (10) est relié de manière articulée à la plaque de fond et à la plaque de réception.
